# EUROPÄISCHE PATENTANMELDUNG

(11) **EP 1 371 472 A1**
(43) Veröffentlichungstag der Anmeldung: **17.12.2003**
(21) Anmeldenummer: 03011505.9
(22) Anmeldetag: 21.05.2003
(51) Int. Cl.: B29C 45/56

(54) **Vorrichtung und Verfahren zum Spritzprägen sowie nach dem Verfahren hergestelltes Bauteil**

(30) Priorität: 13.06.2002 DE 10226301
(71) Anmelder: Preh-Werke GmbH & Co. KG, 97616 Bad Neustadt a.d. Saale (DE)
(72) Erfinder: Lochner, Peter, 97618 Wollbach (DE); Hahn, Roland, 97618 Niederlauer (DE); Metz, Alexander, 97657 Schmalwasser (DE); Bardroff, Hans, 97618 Hohenroth (DE); Stahl, Martin, 97708 Steinach (DE)
(74) Vertreter: Dietrich, Barbara

(57) **Zusammenfassung**

Es wird vorgeschlagen, das Schließen eine Spritzgießvorrichtung bereits zum Prägen zu nutzen und während des Spritzprozesses bereits den Prägevorgang einzuleiten.

Das kann dadurch erreicht werden, dass eine gegenüber einer Spritzform (2) bewegbare Werkzeugplatte (Druckplatte) (4) zweiteilig ausgebildet ist, die in ihrer Gesamtheit für das Spritzen und für das Prägen von einem Kniehebelgetriebe (7) bewegt wird. Dabei ist ein an der Werkzeugplatte (4) befestigter Prägestempel (5) auf der selben Höhe wie die hintere Wand.

Während des Spritzgießens wird die gesamte Druckplatte (4) bis zu einem vorgegebenen Anschlag verstellt, wobei Federelemente (6) ein Öffnen beim Spritzen verhindern und der Kniehebel (7) noch nicht in seine Endlage verfahren worden ist. Ist die vorbestimmte Schließposition für das Spritzgießen erreicht, und somit eine erste Formgebung geschaffen, erfolgt sich lückenlos anschließend und innerhalb der Viskosität des Kunststoffes eine weitere geringfügige Verstellung des Prägestempels (5) in Richtung Einspritzbereich (2.3) des Spritzwerkzeuges (2). Der Prägestempel (5) wird dabei in das Kunststoffspritzteil gedrückt, wobei die Kunststoffwand in diesem Bereich komprimiert und dabei verdünnt oder getrennt wird. Das Kniegelenkgetriebe (7) wird dazu innerhalb des Spritzprozesses und dem Prägevorgang gleichmäßig verfahren.

## Beschreibung

Gegenstand der vorliegenden Erfindung ist eine Vorrichtung sowie ein Verfahren zum Umformen von Kunststoffen beim Spritz-/Prägevorgang sowie ein danach hergestelltes Bauteil.

Die DE 43 10 791 A1 beschreibt eine Schließeinheit für Spritzgießmaschinen mit Kniehebelantrieb zur Verarbeitung von Kunststoffen. Die Probleme, einen einfach einstellbaren und von den am oder im Werkzeug wirkenden Kräften unabhängigen, exakt definierten Spalt zwischen den beiden Werkzeughälften einhalten und anschließend einen zusätzlichen Hub bis zum endgültigen Schließen der Werkzeughälften ausführen zu können und der Aufbau der erhöhten Schließkraft werden dadurch gelöst, dass einem Schließzylinder ein Verstellzylinder nachgeschaltet ist. Ein mit dem Schließzylinderkolben verbundener Anschlag steht einem mit dem Verstellkolben in Verbindung stehenden weiteren Anschlag gegenüber.

Eine weitere Pressvorrichtung einer Spritzprägemaschine ist der DE 44 32 723 C2 entnehmbar. Die Spritzprägemaschine besitzt neben einer stationären Werkzeugaufspannplatte eine zu dieser bewegbare weitere Werzeugaufspannplatte, die durch ein Kniehebelgetriebe verstellt werden kann. Dadurch wird eine Pressvorrichtung geschaffen, die sich für verschiedene Spritzgußmaschinen bei verschiedenen Einspritzund Formvorgängen unter Druck verwenden lässt.

In der DE 197 45 909 A1 werden ein Verfahren zum diskontinuierlichen Umformen von Kunststoffen, eine Vorrichtung zur Durchführung des Verfahrens sowie dabei hergestellte Bauteile betrachtet. Eine oder beide Werkzeughälften besitzen dabei einen oder mehrere der Werkzeugkontur angehörende bewegliche Teile, welche gegenüber ihren Werkzeughälften Relativitätsbewegungen positiver als auch negativer Art ausführen können. Diese beweglichen Teile, die als Zusatzpressen bezeichnet werden, sind jeweils über einen Kniehebel verstellbar. Die Verstellung der Zusatzpressen erfolgt durch eine Steuerung bzw. Regelung sowohl stempelweg- als auch presszeitabhängig.

Die DE 198 42 385 A1 schlägt eine Vorrichtung und ein Verfahren zum Spritzprägen vor, mit der eine hohe Abbildungsgenauigkeit der herzustellenden Formteile gewährleistet wird.

Insbesondere bei der Herstellung von Bauteilen mit unterschiedlichen Materialdicken ergeben sich Probleme beim Spritzprägen, da beim Prägevorgang unsaubere Frontflächen bzw. negatives Fließen bedingt durch den kurzzeitigen Hohlraum unterhalb des Prägestempels entstehen können.

Die gattungsgemäße DE 88 06 805 U1, welche ein Spritzwerkzeug zur Herstellung von Kunststoffteilen großer, wanddicker Unterschiede auf Spritzgießmaschinen offenbart, schlägt vor, dass beim Einspritzen des Kunststoffes von der Spritzmaschinen dieser in ein Formnest des Kunststoffspritzteiles fließt, so dass auch der vergrößerte Formenraum voll ausgefüllt wird. Ehe der Spritzzyklus beendet ist, wird über einen Antrieb und ein Keilgetriebe von der Spritzseite aus ein Kernführungsbolzen in den noch flüssigen Kunststoff verschoben. Dieser Kernführungsbolzen drückt dabei den Kunstsoffüberschuß in das übrige Formnest zurück, wobei die Dichtigkeit des Kunststofffilmes beim nachfolgenden Abkühlvorgang garantiert wird.

Aus der DE 195 31 131 C2 ist eine Vorrichtung zum Spritzprägen von insbesondere scheibenförmige Kunststoffartikel in einer Spritzgießmaschine beschrieben. Durch eine vollständige Entkopplung des Prägestempelantriebes vom Formschließmechanismus ist sowohl der Hub als auch die Prägekraft sehr genau und reproduzierbar einstellbar. Wegen des Aufwandes für eine gesonderte Wegmessung im Bereich des Prägehubes wird eine Schließeinheit mit Kniehebelmechanismus ausgeschlossen. Nachteilig ist, dass der gesamte Vorgang maschinengesteuert und damit zu träge ist.

Die Erfindung stellt sich die Aufgabe, eine einfache Vorrichtung sowie ein Verfahren zum Spritzprägen zur Herstellung von insbesondere Kunststoffartikel mit unterschiedlichen Materialdicken aufzuzeigen.

Gelöst wird die Aufgabe durch die Merkmale des Patenanspruchs 1, des Patentanspruchs 5 sowie des Patentanspruchs 8.

Der Erfindung liegt die Idee zugrunde, das Schließen der Spritzgießvorrichtung zum Prägen zu nutzen und während des Spritzprozesses bereits den Prägevorgang einzuleiten.
Das kann dadurch erreicht werden, dass eine gegenüber einer Spritzform bewegbare Werkzeugplatte (Druckplatte) zweiteilig ausgebildet ist, die in ihrer Gesamtheit für das Spritzen und für das Prägen von einem Kniehebelgetriebe bewegt wird. Dabei ist ein an der Werkzeugplatte befestigter Prägestempel auf der selben Höhe wie die hintere Wand.
Während des Spritzgießens wird die gesamte Druckplatte bis zu einem vorgegebenen Anschlag verstellt, wobei Federelemente ein Öffnen beim Spritzen verhindern und der Kniehebel noch nicht in seine Endlage verfahren worden ist. Ist die vorbestimmte Schließposition für das Spritzgießen erreicht, und somit eine erste Formgebung geschaffen, erfolgt sich lückenlos anschließend und innerhalb der Viskosität des Kunststoffes eine weitere geringfügige Verstellung des Prägestempels in Richtung Einspritzbereich des Spritzwerkzeuges. Der Prägestempel wird dabei in das Kunststoffspritzteil gedrückt, wobei die Kunststoffwand in diesem Bereich komprimiert und dabei verdünnt oder getrennt wird. Das Kniegelenkgetriebe wird dazu innerhalb des Spritzprozesses und dem Prägevorgang gleichmäßig verfahren.

Vorteilhaft ist, dass ein Nachdruck, um dem bekannten Masseverlust zu begegnen und der sonst durch ein Nachspritzen behoben wird, mit diesem Prägehub realisiert wird. Lufteinschlüsse als auch Bindenähte im Prägebereich werden ausgeschlossen.

Der Vorteil einer solchen Spritzprägemaschine liegt darin, dass die Druckplatte selbst maschinenunabhängig und somit universell in unterschiedlichen Spritzmaschinen einsetzbar ist. Alleinig der Prägestempel ist bei Notwendigkeit auszutauschen. Es kann auf einen separaten Antrieb verzichtet werden und es bedarf daher keiner gesonderten Steuerung.

Das Spritzteil bzw. Kunststoffteil, beispielsweise ein Tastenoberteil, weist zumindest in einem Bereich eine geringere Materialdicke auf. Insbesondere Bauteile mit engen Schlitzformen, in denen diese eine geringerer Materialdicke aufweisen, sind mit diesem Verfahren sowie dieser Vorrichtung herstellbar. Dabei können Bauteile mit einer Wandstärken von unter 0,4 mm vollautomatisch hergestellt werden, die zudem eine hohe optische Güte aufweisen.

Weitere, sich daraus in der Verwendung derartiger Teile ergebene Vorteile sind eine höhere Leuchtdichte an der Prägestelle, wenn diese hinterleuchtet werden soll.

In Weiterführung ergibt sich noch der Vorteil, dass diese Leuchtquellen dann einen niedrigeren Stromverbrauch und somit eine geringere Eigenwärme aufweisen.

Anhand eines Ausführungsbeispieles mit Zeichnung soll die Erfindung näher erläutert werden.

Es zeigt
- Fig. 1: eine Prinzipdarstellung der Vorrichtung vor dem Prägen,
- Fig. 2: eine Darstellung der Vorrichtung nach dem Prägen,
- Fig. 3: ein Darstellung eine nach dem Verfahren und mit der Vorrichtung hergestellten Bauteils,
- Fig. 3a: eine Schnittdarstellung im Schnitt A-A aus Fig.3,
- Fig. 4: ein weiteres mit der Vorrichtung herstellbares Kunststoffteil,
- Fig. 5: in einer Ausschnittsdarstellung eines der Federelemente aus Fig. 1.

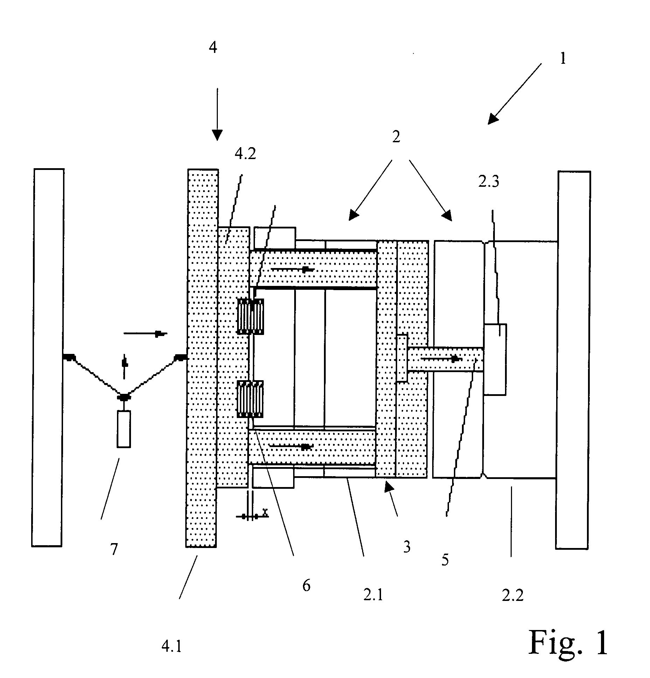

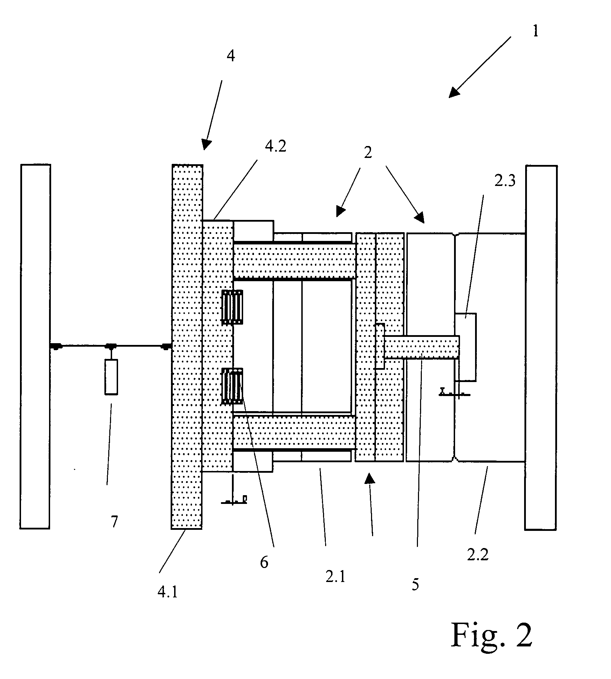

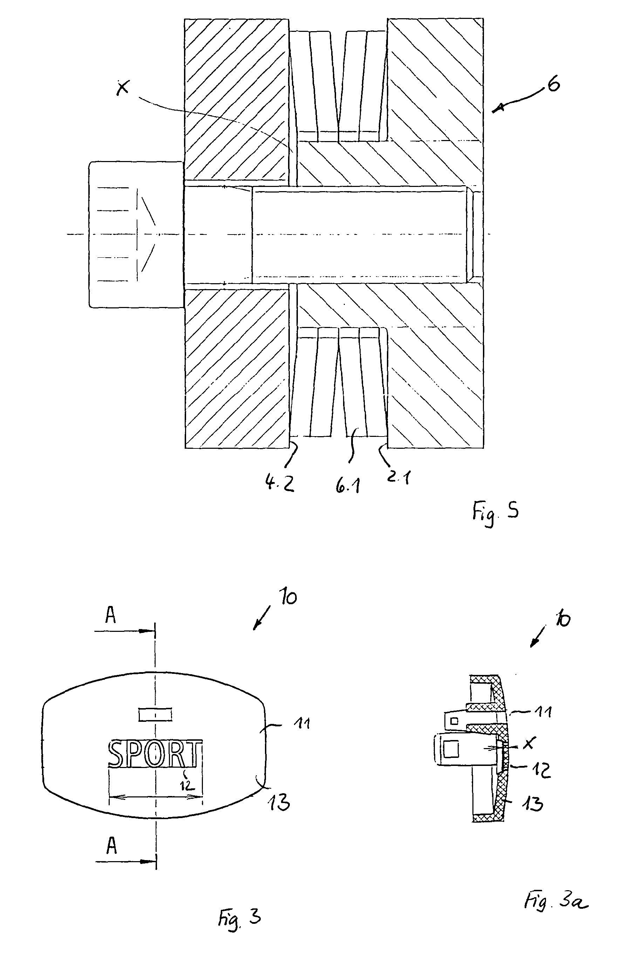

In Fig. 1 ist skizzenhaft und zur Veranschaulichung der Idee vereinfacht eine Spritz/Prägevorrichtung 1 mit einem zweiteiligen Form- bzw. Spritzwerkzeug 2 und einem Einspritzbereich 2.3 (Spritzseite) für den Kunststoff sowie ein mit einem Spritzwerkzeugteil 2.1 zusammenwirkendes Prägewerkzeug 3 (Schließseite) dargestellt, das eine mit Teilen des Spritzwerkzeugteiles 2.1 zusammenwirkende und zum anderen Spritzwerkzeugteil 2.2 bewegbare zweiteilige Werkzeug- bzw. Druckplatte 4 aufweist. Der Übersichtlichkeit halber sind Maschinenbett und Schließeinheit nicht weiter dargestellt. Auch die Einzelteile einer Einspritzeinheit bleiben in der Darstellung unberücksichtigt. Betrachtet wird letztlich der eigentliche Prägevorgang.
Wesentliche Teile des Prägewerkzeuges 3 sind neben der Druckplatte 4 ein Prägestempel 5, der mit der Druckplatte 4 in direkter Wirkverbindung steht. Zwischen dem vorderen Druckplattenteil 4.2 und dem hinteren Spritzwerkzeugteil 2.1 sind Federelemente 6 eingebunden. Mit der hinteren Fläche des Druckplattenteils 4.1 ist ein Kniehebelgetriebe 7 verbunden, welches das Spritzwerkzeugteil 2.1 und die Druckplatte 4 gegenüber dem Spritzwerkzeugteil 2.2 beim Spritzgießen und zum Prägen verstellt. Nicht näher dargestellt ist die mechanische Verbindung zwischen dem Druckplattenteil 4.1 und dem vorderen Spritzwerkzeugteil 2.1.

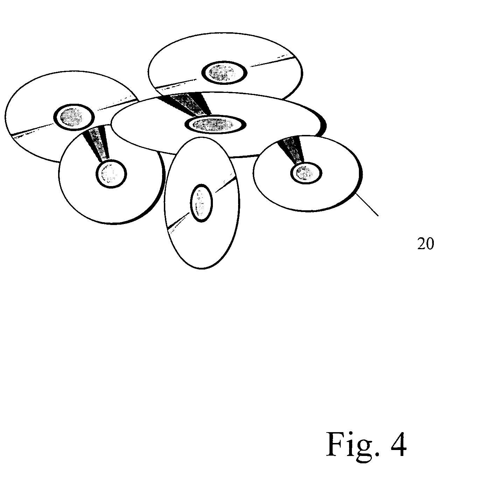

Die Funktionsweise soll anhand von Fig. 1 und Fig. 2 näher erläutert werden.

Das Spritzwerkzeug 2 wird über die Schließeinheit in bekannter Art und Weise zugefahren, wobei der eigentliche Spritzvorgang eingeleitet wird, was durch Einspritzen eines plastifizierten Kunststoffes in das Formteil bzw. in den Einspritzbereich 2.3 unter Druck erfolgt. Die während des Einspritzvorganges gegen die gesamte Druckplatte 4 auftretenden Kräfte werden über die Federelemente 6 aufgefangen, um zu verhindern, dass sich die Druckplatte 4 durch den Innendruck beim Spritzvorgang öffnen könnte. Gleichzeitig erfolgt eine für den Prägehub X vorgesehene Beabstandung der Druckplatte 4 zum Spritzwerkzeugteil 2.1 während des Spritzprozesses.
Der Spritzvorgang selbst ist mit Schließen des Spritzwerkzeuges 2, wie in Fig. 1 aufgezeigt, soweit fortgeschritten, dass der Prägevorgang sich dem Spritzvorgang nahtlos anschließen kann, so dass parallel dazu die Druckplatte 4 den Prägestempel 5 in das Formteil 2.3 verbringt, was durch weiteres Einwirken des bis dahin noch nicht in seine Endstellung verfahrenen Kniehebelgetriebes 7 auf die Druckplatte 4 erfolgt.

Dieses Verstellen des Prägestempels 5 erfolgt innerhalb der Viskosität des Kunststoffes nach der ersten Formgebung durch eine geringfügige Verstellung des Prägestempels 5, ca. 1/10 sek, in den Kunststoff bzw. in den Einspritzbereich 2.3 hinein, wie in Fig. 2 dargestellt. Das bewirkt eine Komprimierung des Kunststoffes in diesem Prägebereich, wodurch die Wand des Kunststoffteils in diesem Bereich um den Prägehub X verdünnt wird. Im Abschluß werden die Vorrichtung 1 wieder auseinander gefahren und der Kunststoffartikel dem Spritzwerkzeug 2 entnommen.

Fig. 3 zeigt ein derartig hergestellten Kunststoffartikel 10. Hierbei handelt es sich um ein Tastenoberteil 11 eines nicht näher dargestellten Betätigungselementes, beispielsweise in der Kfz-Elektronik. Der mit 12 bezeichnete Bereich ist dünnwandiger, als der mit 13 gekennzeichnete, was deutlicher in der Fig. 3a erkennbar ist, welche das Tastenoberteil 11 im Schnitt A-A aus Fig. 3 darstellt.

Es versteht sich, dass das aufgezeigte Tastenoberteil 11 nicht der einzige Kunststoffartikel 10 ist, welches nach diesem Verfahren hergestellt werden kann. So sind auch die eingangs genannten CD's 20 (Fig. 4) sowie andere, unterschiedliche Materialstärken aufweisende Kunststoffartikel 10 damit herstellbar.

Der Vollständigkeit halber ist in Fig. 5 eines der Federelemente 6 in einer vergrößerten Ansicht aufgezeigt. Die Federn 6.1 werden beim weiteren Verstellen der Druckplatte 4 gegen das Spritzwerkzeugteil 2.1 derart verformt, dass die beiden Flächen des Druckplattenteils 4.2 als auch des hinteren Spritzwerkzeugteils 2.1 sich körperlich nähern. Wie bereits beschrieben, wird dadurch die weitere Prägung durch den Prägestempel 5 innerhalb des Kunststoffartikels 10, 20 realisiert.

## Patentansprüche

1. Verfahren zum Spritzprägen von insbesondere Kunststoffartikel wanddicker Unterschiede, wobei schon während eines Spritzprozesses ein Prägevorgang eingeleitet wird, **dadurch gekennzeichnet, dass**
- das Schließen einer Spritz-/Prägevorrichtung (1) zum Prägen genutzt wird, wobei
- nach einer ersten Formgebung ein auf der Schließseite befindlicher Prägestempel (5) geringfügig derart verstellt wird, dass der im Einspritzbereich (2.3) befindliche Kunststoff im Prägebereich komprimiert und dabei dünnwandiger oder getrennt wird und
- die Verstellung durch ein Kniegelenkgetriebe (7) erfolgt, welches ohne Unterbrechung innerhalb des Spritzprozesses und des Prägevorganges gleichmäßig verfahren wird.

2. Verfahren nach Anspruch 1, **dadurch gekennzeichnet, dass** das Verstellen des Prägestempels (5) innerhalb der Viskosität des Kunststoffes nach der ersten Formgebung erfolgt.

3. Verfahren nach Anspruch 1 oder 2, **dadurch gekennzeichnet, dass** der Prägestempels (5) geringfügig innerhalb eines Prägehubes (X) in den Kunststoff bzw. in den Einspritzbereich (2.3) hinein gedrückt wird.

4. Verfahren nach Anspruch 3, **dadurch gekennzeichnet, dass** ein Nachdruck durch den Prägehub (X) realisiert wird.

5. Spritz-/Prägevorrichtung zum Spritzprägen von insbesondere Kunststoffartikel wanddicker Unterschiede, aufweisend zumindest ein Spritzwerkzeug sowie ein Prägewerkzeug mit einem Prägestempel, **dadurch gekennzeichnet, dass**
- das Prägewerkzeug (3) eine mit einem Teil (2.1) des Spritzwerkzeuges (2) zusammenwirkende zweiteilige Werkzeug- bzw. Druckplatte (4) aufweist,
- die mit ihrem hinteren Teil (4.2) mit dem Prägestempel (5.1) in Wirkverbindung stehen, wobei
- das vordere Teil (4.1) der Druckplatte (4) mit einem Kniehebelgetrieb (7) verbunden ist.

6. Spritz-/Prägevorrichtung nach Anspruch 4, **dadurch gekennzeichnet, dass** die Druckplatte (4) gleichzeitig Teil des Spritzwerkzeuges (2) ist.

7. Spritz-/Prägevorrichtung nach einem der Ansprüche 4 oder 5, **dadurch gekennzeichnet, dass** zwischen der Druckplatte (4) und dem Spritzwerkzeugteil (2) Federelemente (6) eingebunden sind, die ein Öffnen beim Spritzen verhindern.

8. Bauteil hergestellt nach dem Verfahren, aufweisend zumindest einen dünnwandigen und einen dickwandigeren Bereich (13).

9. Bauteil nach Anspruch 8, **dadurch gekennzeichnet, dass** der dünnwandige Bereich (12) schlitzförmig ist.

10. Bauteil nach Anspruch 8, **dadurch gekennzeichnet, dass** der dünnwandige Bereich (12) ein Loch ist.
